(19) Europäisches Patentamt
European Patent Office
Office européen des brevets

(11) Veröffentlichungsnummer : **0 126 710**
**B1**

(12) # EUROPÄISCHE PATENTSCHRIFT

(45) Veröffentlichungstag der Patentschrift : **30.09.87**

(51) Int. Cl.⁴ : **A 01 N 25/32**, C 07 F 9/40, C 07 F 9/32, C 07 F 9/53

(21) Anmeldenummer : **84810186.1**

(22) Anmeldetag : **13.04.84**

(54) **Mittel zum Schützen von Kulturpflanzen vor der phytotoxischen Wirkung von Herbiziden.**

(30) Priorität : **21.04.83 CH 2150/83**

(43) Veröffentlichungstag der Anmeldung : **28.11.84 Patentblatt 84/48**

(45) Bekanntmachung des Hinweises auf die Patenterteilung : **30.09.87 Patentblatt 87/40**

(84) Benannte Vertragsstaaten : **BE CH DE FR GB IT LI NL**

(56) Entgegenhaltungen :
**DE-A- 2 052 569**
**DE-A- 2 557 139**
**US-A- 4 170 463**

(73) Patentinhaber : **CIBA-GEIGY AG**
**Klybeckstrasse 141**
**CH-4002 Basel (CH)**

(72) Erfinder : **Maier, Ludwig, Dr.**
**Im Lee 28**
**CH-4144 Arlesheim (CH)**
Erfinder : **Moser, Hans, Dr.**
**Blumenrain 3**
**CH-4312 Magden (CH)**

**EP 0 126 710 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein Mittel zum Schutz von Kulturpflanzen vor der phytotoxischen Wirkung von Herbiziden, welches als Herbizid-antagonistischen Wirkstoff ein Halogenacyl-aminoalkyl-phosphonat, -phosphinat oder -phosphinoxid der Formel I und neben diesem antagonisierenden Wirkstoff, auch Antidote oder Gegenmittel genannt, das Herbizid enthalten und ein Verfahren zur selektiven Unkrautbekämpfung mittels eines Herbizides und diesem Gegenmittel. Die Erfindung umfasst auch neue Halogenacyl-aminoalkyl-phosphonate,-phosphinate und -phosphinoxide und deren Herstellung.

Es ist bekannt, dass Herbizide aus den verschiedensten Stoffklassen, wie Triazine, Harnstoffderivate, Carbamate. Thiolcarbamate, Halogenacetanilide, Halogenphenoxyessigsäuren usw. bei der Anwendung in wirksamer Dosis gelegentlich neben den zu bekämpfenden Unkräutern auch die Kulturpflanzen in gewissem Masse schädigen. Ueberdosen werden oft ungewollt und zufälligerweise appliziert, wenn sich Randzonen beim streifenweisen Spritzen überdecken, sei es durch Windeinwirkung oder durch falsches Einschätzen der Breitenwirkung des Spritzgerätes. Es können klimatische Verhältnisse oder eine Bodenbeschaffenheit vorliegen, so dass die für normale Bedingungen empfohlene Herbizidmenge als Ueberdosis wirkt. Die Qualität des Saatgutes kann bei der Herbizidverträglichkeit auch eine Rolle spielen. Um diesem Problem zu begegnen, sind schon verschiedene Stoffe vorgeschlagen worden, welche befähigt sind, die schädigende Wirkung des Herbizids auf die Kulturpflanze spezifisch zu antagonisieren, d. h. die Kulturpflanze zu schützen, ohne dabei Herbizidwirkung auf die zu bekämpfenden Unkräuter merklich zu beeinflussen. Dabei hat es sich gezeigt, dass die vorgeschlagenen Gegenmittel sowohl bezüglich der Kulturpflanzen als auch bezüglich des Herbizids und gegebenenfalls auch in Abhängigkeit von der Applikationsart oft sehr artspezifisch wirken, d. h. ein bestimmtes Gegenmittel eignet sich oft nur für eine bestimmte Kulturpflanze und einige wenige herbizide Stoffklassen.

So beschreibt die Britische Patentschrift 1,277,557 die Behandlung von Samen bzw. Sprösslingen von Weizen und Sorghum mit gewissen Oxamsäureestern und Amiden zum Schutz vor dem Angriff durch « ALACHLOR » (N-Methyloxymethyl-N-chloracetyl-2,6-diäthylanilin). In den Deutschen Offenlegungsschriften 1.952.910 und 2.245.471, sowie in der Französischen Patentschrift 2.021.611 werden Gegenmittel zur Behandlung von Getreide-, Mais- und Reissamen zum Schutz gegen die schädigende Einwirkung von herbizid wirksamen Thiolcarbamaten vorgeschlagen. Gemäss der Deutschen Patentschrift 1.576.676 und der US-Patentschrift 3.131.509 werden Hydroxyaminoacetanilide und Hydantoine für den Schutz von Getreidesamen gegenüber Carbamaten verwendet.

Die direkte pre- oder postemergente Behandlung gewisser Nutzpflanzen mit Gegenmitteln als Antagonisten bestimmter Herbizidklassen auf einer Anbaufläche ist in den Deutschen Offenlegungsschriften 2.141.586 und 2.218.097, sowie im US-Patent 3.867.444 beschrieben.

Ferner können Maispflanzen gemäss der Deutschen Offenlegungsschrift 2.402.983 wirksam vor Schädigung durch Chloracetanilide geschützt werden, indem man dem Boden als Gegenmittel ein N-disubstituiertes Dichloracetamid zuführt.

Die als Herbizid-antagonistisch verwendbaren Halogenacyl-aminoalkyl-phosphonate, -phosphinate oder phosphinoxide entsprechen der Formel I

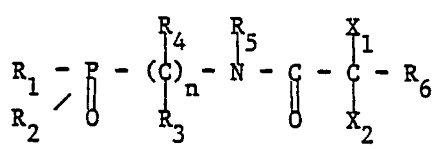

(I)

worin

$R_1$ $C_1$-$C_4$-Alkyl, $C_1$-$C_4$-Alkoxy, $C_2$-$C_4$-Alkenyloxy, $C_2$-$C_4$-Alkinyl-oxy, $C_1$-$C_4$-Halogenalkyl, $C_2$-$C_8$-Alkoxyalkoxy oder $C_1$-$C_4$-Cyanoalkoxy,

$R_2$ Wasserstoff oder einen Substituenten wie $R_1$,

$R_3$ und $R_4$ unabhängig voneinander je Wasserstoff, $C_1$-$C_4$-Alkyl oder eines davon auch einen Rest

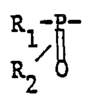

$R_3$ und $R_4$ zusammen mit dem Kohlenstoffatom, an das sie gebunden sind auch einen $C_3$-$C_{11}$-Cycloalkylrest,

$R_5$ Wasserstoff, $C_1$-$C_4$-Alkyl, $C_3$-$C_7$-Cycloalkyl, $C_2$-$C_4$-Alkenyl, $C_2$-$C_4$-Alkinyl, $C_2$-$C_8$-Alkoxyalkyl, $C_1$-$C_4$-Halogenalkyl oder Aralkyl,

$R_6$ Wasserstoff oder $C_1$-$C_4$-Alkyl,

$X_1$ und $X_2$ je Halogen oder eines davon auch Wasserstoff und

n eine Zahl 1, 2 oder 3 bedeuten.

In den Alkylgruppen und den Resten welche Alkylteile enthalten kann Alkyl durch Methyl, Ethyl, n- und iso-Propyl, sowie n-, iso-, sec- und tert.-Butylreste vertreten sein. Alkenylreste sind beispielsweise Vinyl-, Allyl- Methallyl-, Butenyl- und Butadienyl-, Alkinylreste sind z. B. der Ethinyl-, die Propinyl und Butinylreste. Die Cycloalkylreste umfassen die gegebene Anzahl Kohlenstoffatome, können mono- oder bicyclisch sein, als Beispiele seien genannt: Cyclopropyl-, Cyclobutyl-, Cyclopentyl-, Cyclohexyl-, Cycloheptyl-, Cyclooctyl sowie Bicyclo-[2.2.1] heptyl-, Bicyclo [3.2.1]-octyl und Decahydronaphthylreste.

Aralkylreste umfassen über $C_1$-$C_4$-Alkyl gebundene Phenyl- und Naphthylreste, bevorzugt ist der Phenylethyl und vor allem der Benzylrest.

Unter Halogen kommen Fluor, Chlor, Brom und Iod in Frage, bevorzugt sind Chlor und Brom.

Durch ihre Wirkung aufgefallen sind Halogenacyl-aminoalkyl-phosphonate, der Formel I in denen
$R_1$ und $R_2$ je $C_1$-$C_4$-Alkoxy,
$R_3$ und $R_4$ je Wasserstoff oder Methyl
$R_5$ Wasserstoff, $C_1$-$C_4$-Alkyl oder Benzyl
$R_6$ Wasserstoff
$X_1$ und $X_2$ je Chlor oder eines davon Wasserstoff
n die Zahl 1 bedeuten,
ferner die Halogenacyl-aminoalkyl-phosphinate der Formel I in denen
$R_1$ $C_1$-$C_4$-Alkoxy
$R_2$ $C_1$-$C_4$-Alkyl
$R_3$ und $R_4$ je Wasserstoff oder Methyl
$R_5$ Wasserstoff, $C_1$-$C_4$-Alkyl oder Benzyl
$R_6$ Wasserstoff
$X_1$ und $X_2$ je Chlor oder eines davon Wasserstoff und
n die Zahl 1 bedeuten, oder die
Halogenacyl-aminoalkyl-phosphinoxide der Formel I, worin
$R_1$ $C_1$-$C_4$-Alkyl
$R_2$ Wasserstoff oder $C_1$-$C_4$-Alkyl,
$R_3$ und $R_4$ je Wasserstoff oder Methyl,
$R_5$ Wasserstoff, $C_1$-$C_4$-Alkyl oder Benzyl
$R_6$ Wasserstoff und
$X_1$ und $X_2$ je Chlor oder eines davon auch Wasserstoff und
n die Zahl 1 bedeuten, besonders aber die Verbindungen

Chloracetyl-aminomethyl-phosphonsäure-diethylester,
Chloracetyl-aminomethyl-phosphonsäure-di-isopropylester,
Dichloracetyl-aminomethyl-phosphonsäure-diethylester,
Dichloracetyl-aminomethyl-phosphonsäure-di-isopropylester,
Bromacetyl-aminomethyl-phosphonsäure-diethylester,
Bromacetyl-aminomethyl-phosphonsäure-di-isopropylester,
Chloracetyl-aminoprop-2-yl-phosphonsäure-diethylester,
Chloracetyl-benzylaminoprop-2-yl-phosphonsäure-diethylester,
Chloracetyl-aminomethen-di-phosphonsäure-diethylester,
Chloracetyl-amino-cyclohex-1-yl-phosphonsäure-diethylester.

Viele Verbindungen der Formel I sind neu, andere sind bekannt. So sind z. B. in der DE-OS 2 322 703 Halogenacyl-aminomethyl-phosphonsäureester als Flammschutzmittel beschrieben, in der US Patentschrift 3 961 934 sind chlorierte Acetyl-, Propionyl oder Butyrylamino-methyl-phosphonsäuren und -ester als Sucrose-förderndes Mittel im Zuckerrohranbau beschrieben. Schliesslich ist die Herstellung solcher Halogenacetyl- und Halogenpropionyl-aminomethyl-phosphonsäureester als Zwischenprodukte für Dihydro-2H-1,2,4-Oxaphosphorin-5(6H)-on-oxiden im Zhurnal Obshohei Khimii 37(9) 2061-5 (1967) (vgl. CA 68 49686 w (1968) oder 46(8) 1693-1698 (1676) beschrieben worden.

Neu sind die Verbindungen der Formel I

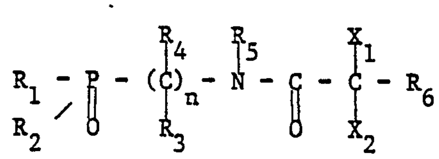

(I)

worin $R_1$, $R_2$, $R_3$, $R_4$, $R_5$, $R_6$, $X_1$, $X_2$ und n die oben gegebene Bedeutung haben, mit der Massgabe, dass $R_1$ und $R_2$ nicht beide Methoxy oder Aethoxy sein können wenn $n = 1$, $R_3$, $R_4$ und $R_6$ je Wasserstoff, $R_5$ Wasserstoff oder Methyl, $X_1$ und $X_2$ je Chlor oder eines davon auch Wasserstoff bedeutet.

Diese neuen Verbindungen werden hergestellt indem man ein Aminoalkyl-phosphonat, -phosphinat oder phosphinoxid der Formel II

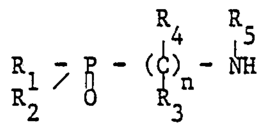

(II)

worin $R_1$, $R_2$, $R_3$, $R_4$, $R_5$ und n die oben gegebene Bedeutung haben, in einem wasserfreien, inerten organischen Lösungsmittel in Gegenwart der äquimolaren Menge einer organischen Base mit der äquimolaren Menge eines Halogenacylhalides oder Halogenacylanhydrides der Formel II umsetzt

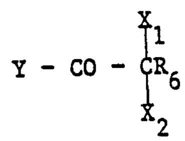

(III)

worin Y ein Halogenatom oder einen Rest

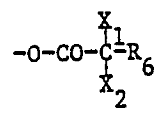

bedeutet und $R_6$, $X_1$ und $X_2$ die oben gegebene Bedeutung haben und das Kondensations-produkt aus dem Reaktionsgemisch isoliert.

Die Umsetzung findet bei Raumtemperatur bis Siedepunkt des Lösungsmittels statt. Sie ist leicht exotherm und Kühlen mittels Wasserbad, so dass die Temperatur nicht über 50 °C steigt ist angezeigt.

Als inerte wasserfreie Lösungsmittel kommen Ether wie Diethylether, Diisopropylether, Dioxan, Ketone wie Aceton Methylethylketon, Aromaten wie Benzol oder Toluol in Betracht, in denen die Reaktionsteilnehmer löslich sind. Bevorzugte Halogenatome Y sind Chlor und Brom. Das Isolieren des gebildeten Kondensationsproduktes geschieht durch Eindampfen des Lösungsmittels, nachdem man das gebildete Salz abfiltriert hat.

Als organische Basen kommen tertiäre Amine, Dimethylanilin, Triethylamin aber auch Pyridin oder Kollidin in Frage.

Zur Reinigung wird das Endprodukt z. B. aus einem Ether umkristallisiert.

Ein solches Gegenmittel oder Andidote der Formel I kann je nach Anwendungszweck zur Vorbehandlung des Saatgutes der Kulturpflanze (Beizung des Samens oder der Stecklinge) eingesetzt oder vor oder nach der Saat in den Boden gegeben werden. Es kann aber auch für sich allein oder zusammen mit dem Herbizid vor oder nach dem Auflaufen der Pflanzen appliziert werden. Die Behandlung der Pflanze oder des Saatgutes mit dem Antidote kann daher grundsätzlich unabhängig vom Zeitpunkt der Applikation der phytotoxischen Chemikalie erfolgen. Die Behandlung der Pflanze kann jedoch auch durch gleichzeitige Applikation von phytotoxischer Chemikalie und Gegenmittel (Tankmischung) erfolgen. Die preemergente Behandlung schliesst sowohl die Behandlung der Anbaufläche vor der Aussaat (ppi = pre plant incorporation) als auch die Behandlung der angesäten, aber noch nicht bewachsenen Anbauflächen ein.

Die Aufwandmengen des Gegenmittels im Verhältnis zum Herbizid richten sich weitgehend nach der Anwendungsart. Bei einer Feldbehandlung, bei der Herbizid und Gegenmittel entweder gleichzeitig (Tankmischung) oder separat appliziert werden, liegt das Verhältnis der Mengen von Gegenmittel zu Herbizid im Bereich von 1 : 100 bis 5 : 1. In der Regel wird bei einem Mengenverhältnis von Gegenmittel zu Herbizid von 1 : 5 bis 1 : 50 die volle Schutzwirkung erreicht. Bei der Samenbeizung und ähnlichen gezielten Schutzmassnahmen werden jedoch weit geringere Mengen Gegenmittel im Vergleich mit den später pro Hektar Anbaufläche verwendeten Mengen an Herbizid benötigt. Im allgemeinen werden bei der Samenbeizung pro kg Samen 0,1-10 g Gegenmittel benötigt. In der Regel wird mit 0,1-2 g Gegenmittel pro kg Samen bereits die volle Schutzwirkung erreicht. Falls das Gegenmittel kurz vor der Aussaat durch Samenquellung appliziert werden soll, so werden zweckmässig Lösung des Gegenmittels, welche den Wirkstoff in einer Konzentration von 1-10'000 ppm enthalten. In der Regel wird mit Konzentrationen des Gegenmittels von 100-1'000 ppm die volle Schutzwirkung erreicht.

In der Regel liegt zwischen protektiven Massnahmen, wie Samenbeizung und Behandlung von Stecklingen mit einem Gegenmittel der Formel I und der möglichen späteren Feldbehandlung mit Agrarchemikalien ein längerer Zeitraum. Vorbehandeltes Saat- und Pflanzengut kann später in der Landwirtschaft, im Gartenbau und in der Forstwirtschaft mit unterschiedlichen Chemikalien in Berührung kommen. Die Erfindung bezieht sich daher auch auf protektive Mittel für Kulturpflanzen, die als Wirkstoff ein Gegenmittel der Formel I zusammen mit üblichen Trägerstoffen enthalten. Solche Mittel können gegebenenfalls zusätzlich jene Agrarchemikalien enthalten, vor deren Einfluss die Kulturpflanze geschützt werden soll.

Als Kulturpflanzen gelten im Rahmen vorliegender Erfindung alle Pflanzen, die in irgendeiner Form Ertragsstoffe, wie Samen, Wurzeln, Stengel, Knollen, Blätter Blüten, ferner Inhaltsstoffe, wie Oele, Zucker, Stärke, Eiweiss usw., produzieren und zu diesem Zweck angebaut werden. Zu diesen Pflanzen gehören beispielsweise sämtliche Getreidearten, wie Weizen, Roggen, Gerste und Hafer, daneben vor allem Reis, Kulturhirse, Mais, Baumwolle, Zuckerrüben, Zuckerrohr, Soja, Bohnen und Erbsen.

Das Gegenmittel kann überall dort eingesetzt werden, wo eine Kulturpflanze der vorgenannten Art vor der schädlichen Wirkung einer Agrarchemikalie geschützt werden soll. Dabei kommen als Agrarchemikalien, wie bereits ausgeführt, in erster Linie Herbizide der verschiedensten Stoffklassen, insbesondere jedoch Halogenacetanilide und Thiolcarbamate in Betracht.

Halogenacetanilide, deren schädigende Wirkung gegenüber Kulturpflanzen mit Hilfe der neuen Halogenacyl-aminoalkylphosphonate, -phosphinate und- phosphinoxide der Formel I aufgehoben werden kann, sind bereits in grosser Zahl bekannt geworden (vgl. z. B. DE-A 2305495, 2328340, 2212268, 2726253 und 2805757, sowie US Patentschriften 3.946.044, 4.022.608 und 4.039.314). Solche Halogenacetanilide können durch die folgende allgemeine Formel VII beschrieben werden :

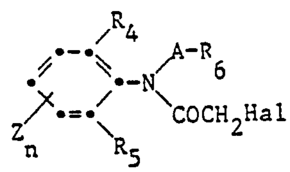

(VII)

In dieser Formel bedeuten Hal Halogen, insbesondere Chlor oder Brom, $R_4$ und $R_5$ unabhängig voneinander je Wasserstoff, Halogen, niederes Alkyl, Alkoxy, Alkylthio, Halogenalkyl, Alkoxyalkyl oder Alkylthio-alkyl, Z Wasserstoff, Halogen, niederes Alkyl, Alkoxy, Alkylthio, Halogenalkyl, Alkoxyalkyl oder Alkylthioalkyl, wobei die vorgenannten Reste Z vorzugsweise in 3-Stellung in Bezug auf das Stickstoffatom stehen, n 0 bis 3, A Alkylen, insbesondere Methylen, 1,1- und 1,2-Aethylen, wobei 1,2-Aethylen durch 1-2 niedere Alkylgruppen substituiert sein kann, und $R_6$ niederes Alkoxy, Hydroxycarbonyl, Alkoxycarbonyl, Carbamoyl, N-Alkylcarbamoyl, N,N-Dialkylcarbamoyl, Cyano, ein gegebenenfalls substituierter stickstoffhaltiger heterocyclischer Rest, Alkanoyl, gegebenenfalls substituiertes Benzoyl, gegebenenfalls substituiertes 1,3,4-Oxadiazol-2-yl, 1,3,4-Thiadiazol-2-yl, 1, 4-Triazol-3-yl oder 1,3,4-Triazol-1-yl bedeutet.

Als einzelne Vertreter solcher Halogenacetanilide seien beispielsweise die folgenden genannt :

N-Aethoxymethyl-N-chloracetyl-2-äthyl-6-methylanilin
N-Chloracetyl-N-methoxymethyl-2,6-diäthylanilin
N-Chloracetyl-N-(2-methoxyäthyl)-2,6-dimethylanilin
N-(2-Allyloxyäthyl)-N-chloracetyl-2,6-dimethylanilin
N-Chloracetyl-N-(2-n-propoxyäthyl)-2,6-dimethylanilin
N-Chloracetyl-N-(2-isopropoxyäthyl)-2,6-dimethylanilin
N-Chloracetyl-N-(2-methoxyäthyl)-2-äthyl-6-methylanilin
N-Chloracetyl-N-(methoxyäthyl)-2,6-diäthylanilin
N-(2-Aethoxyäthyl)-N-chloracetyl-2-äthyl-6-methylanilin
N-Chloracetyl-N-(2-methoxy-1-methyläthyl)-2-methylanilin
N-Chloracetyl-N-(2-methoxy-1-methyläthyl)-2,6-dimethylanilin
N-Chloracetyl-N-(2-methoxy-1-methyläthyl)-2,6-diäthylanilin
N-Chloracetyl-N-(2-methoxy-1-methyläthyl)-2-äthyl-6-methylanilin
N-(2-Aethoxyäthyl)-N-chloracetyl-2,6-diäthylanilin
N-Chloracetyl-N-(2-n-propoxyäthyl)-2-äthyl-6-methylanilin
N-Chloracetyl-N-(2-n-propoxyäthyl)-2,6-diäthylanilin
N-Chloracetyl-N-(2-isopropoxyäthyl)-2-äthyl-6-methylanilin
N-Aethoxycarbonylmethyl-N-chloracetyl-2,6-dimethylanilin
N-Aethoxycarbonylmethyl-N-chloracetyl-2,6-diäthylanilin
N-Chloracetyl-N-methoxycarbonylmethyl-2,6-dimethylanilin
N-Chloracetyl-N-(2,2-diäthoxyäthyl)-2,6-dimethylanilin
N-Chloracetyl-N-(2-methoxy-1-methyläthyl)-2,3-dimethylanilin
N-(2-Aethoxyäthyl)-N-chloracetyl-2-methylanilin
N-Chloracetyl-N-(2-methoxyäthyl)-2-methylanilin
N-Chloracetyl-N-(2-methoxy-2-methyläthyl)-2,6-dimethylanilin
N-(2-Aethoxy-2-methyläthyl)-N-chloracetyl-2-äthyl-6-methylanilin
N-Chloracetyl-N-(1-äthyl-2-methoxyäthyl)-2,6-dimethylanilin
N-Chloracetyl-N-(2-methoxyäthyl)-2-methoxy-6-methylanilin
N-n-Butoxymethyl-N-chloracetyl-2-tert.-butylanilin
N-(2-Aethoxyäthyl-1-methyläthyl)-2,6-dimethylanilin
N-Chloracetyl-N-(2-methoxyäthyl)-2-chlor-6-methylanilin
N-(2-Aethoxyäthyl)-N-chloracetyl-2-chlor-6-methylanilin

N-(2-Aethoxyäthyl)-N-chloracetyl-2,3,6-trimethylanilin
N-Chloracetyl-1-(2-methoxyäthyl)-2,3,6-trimethylanilin
N-Chloracetyl-N-cyanomethyl-2,6-dimethylanilin
N-But-3-in-1-yl-N-chloracetylanilin
N-Chloracetyl-N-propargyl-2-äthyl-6-methylanilin
N-Chloracetyl-N-(1,3-dioxolan-2-ylmethyl)-2,6-dimethylanilin
N-Chloracetyl-N-(1,3-dioxolan-2-ylmethyl)-2-äthyl-6-methylanilin
N-Chloracetyl-N-(1,3-dioxan-2-ylmethyl)-2-äthyl-6-methylanilin
N-Chloracetyl-N-(2-furanylmethyl)-2,6-dimethylanilin
N-Chloracetyl-N-(2-furanylmethyl)-2-äthyl-6-methylanilin
N-Chloracetyl-N-(2-tetrahydrofuranylmethyl)-2,6-dimethylanilin
N-Chloracetyl-N-(N-propargylcarbamoylmethyl)-2,6-dimethylanilin
N-Chloracetyl-N-(N,N-dimethylcarbamoylmethyl)-2,6-dimethylanilin
N-(n-Butoxymethyl)-N-chloracetyl-2,6-diäthylanilin
N-(2-n-Butoxyäthyl)-N-chloracetyl-2,6-diäthylanilin
N-Chloracetyl-N-(2-methoxy-1,2-dimethyläthyl)-2,6-dimethylanilin
N-Chloracetyl-N-isopropyl-2,3-dimethylanilin
N-Chloracetyl-N-isopropyl-2-chloranilin
N-Chloracetyl-N-(1H-pyrazol-1-ylmethyl)-2,6-dimethylanilin
N-Chloracetyl-N-(1H-pyrazol-1-ylmethyl)-2-äthyl-6-methylanilin
N-Chloracetyl-N-(1H-1,2,4-triazol-1-ylmethyl)-2,6-dimethylanilin
N-Chloracetyl-N-(1H-1,2,4-triazol-1-ylmethyl)-2,6-diäthylanilin
N-Benzoylmethyl-N-chloracetyl-2,6-dimethylanilin
N-Benzoylmethyl-N-chloracetyl-2-äthyl-6-methylanilin
N-Chloracetyl-N-(5-methyl-1,3,4-oxadiazol-2-yl)-2,6-diäthylanilin
N-Chloracetyl-N-(5-methyl-1,3,4-oxadioazol-2-yl)-2-äthyl-6-methylanilin
N-Chloracetyl-N-(5-methyl-1,3,4-oxadiazol-2-yl)-2-tert. butylanilin
N-Chloracetyl-N-(4-chlorbenzoylmethyl)-2,6-dimethylanilin
N-Chloracetyl-N-(1-methyl-5-methylthio-1,3,4-triazol-2-ylmethyl)-2,6-diäthylanilin.

Weitere Halogenacetanilide, deren schädigende Wirkung auf Kulturpflanzen durch die Verbindungen der Formel I aufgehoben werden kann, sind in R. Wegler, Chemie der Pflanzenschutz- und Schädlingsbekämpfungsmittel, Bd. 8, Seiten 90-93 und Seiten 322-327 aufgeführt.

Herbizid wirksame Thiolcarbamate, vor deren phytotoxischen Wirkung Kulturpflanzen durch die Verbindungen der Formel I geschützt werden können, sind ebenfalls bereits in grosser Zahl bekannt geworden (vgl. z. B. US-Patentschriften 2.913.327, 3.037.853, 3.175.897, 3.185.720, 3.198.786, 3.582.314 und 3.846.115). Die Schutzwirkung der Verbindungen der Formel I lässt sich insbesondere beim Einsatz von Thiolcarbamaten in Getreide, Reis oder veredelter Sorghum-Hirse vorteilhaft ausnützen.

Die Thiolcarbamate, vor deren phytotoxischer Wirkung Kulturpflanzen, wie Getriede, Reis und veredelte Sorghum-Hirse bevorzugt geschützt werden können, entsprechen den allgemeinen Formeln VIII und IX :

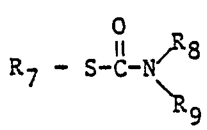 (VIII) 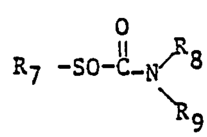 (IX)

In diesen Formeln bedeutet $R_7$ niederes Alkyl, Alkenyl, Chlorallyl, Dichlorallyl, Trichlorallyl, Benzyl oder 4-Chlorbenzyl, $R_8$ $C_2$-$C_4$-Alkyl und $R_9$ $C_2$-$C_4$-Alkyl oder Cyclohexyl, wobei die Reste $R_8$ und $R_9$ zusammen mit dem Stickstoffatom, an das sie gebunden sind, einen Hexahydro-1H-azepin-, Dekahydrochinolin- oder 2-Methyldekahydrochinolin-Ring bilden können.

Als einzelne Vertreter solcher Thiolcarbamate seien beispielsweise die folgenden genannt :

S-Aethyl-N,N-dipropylthiocarbamat,
S-Aethyl-N,N-diisobutylthiocarbamat,
S-2,3-Dichlorallyl-N,N-diisopropylthiolcarbamat,
S-Propyl-N-butyl-N-äthylthiolcarbamat,
S-2,3,3-Trichlorallyl-N,N-diisopropylthiocarbamat,
S-Propyl-N,N-dipropylthiolcarbamat,
S-Aethyl-N-äthyl-N-cyclohexylthiolcarbamat,
S-Aethyl-N-hexahydro-1H-azepin-1-carbothioat,
S-Isopropyl-N,N-hexamethylen-thiolcarbamat,
S-(p-Chlorbenzyl)-N,N-diäthylthiolcarbamat,
N-Aethylthiocarbonyl-cis-decahydrochinolin,

N-Propylthiocarbonyl-decahydrochinaldin,
S-Aethyl-N,N-bis (n-butyl)-thiolcarbamat,
S-tert. Butyl-N,N-bis(n-propyl)-thiolcarbamat.

Neben den Chloracetanilid- und Thiolcarbamaten kommen auch Herbizide anderer Stoffklassen in Betracht, wie beispielsweise

Triazine und Triazinone : 2,4-Bis (isopropylamino)-6-methylthio-1,3,5-triazin (« Prometryn »), 2,4-bis (äthylamino)-6-methylthio)-6-methylthio-1,3,5-triazin (« Simetryn »), 2-(1', 2'-Dimethylpropylamino)-4-äthylamino-6-methyl-thio-1,3,5-triazin (« Dimethametryn »), 4-Amino-6-tert. butyl-4,5-dihydro-3-methylthio-1,2,4-triazin-5-on (« Metribuzin »), 2-Chlor-4-äthyl-amino-6-isopropylamino-1,3,5-triazin (« Atrazin »), 2-Chlor-4,6-bis-(äthylamino)-1,3,5-triazin (« Simazin »), 2-tert. Butylamino-4-chlor-6-äthylamino-1,3,5-triazin (« Terbuthylazin »), 2-tert. Butylamino-4-äthylamino-6-methoxy-1,3,5-triazin (« Terbumeton »), 2-tert. Butylamino-4-äthylamino-6-methylthio-1,3,5-triazin (« Terbutryn »), 2-Aethylamino-4-isopropylamino-6-methylthio-1,3,5-triazin (« Ametryn ») ;

Harnstoffe : 1-(Benzothiazol-1-yl)-1,3-dimethylharnstoff ; Phenylharnstoffe wie beispielsweise 3-(3-Chlor-p-tolyl)-1,1-dimethylharnstoff (« Chlortoluron »), 1,1-Dimethyl-3-(ααα-trifluor-m-tolyl)-harnstoff (« Fluometuron »), 3-(4-Brom-3-chlorphenyl)-1-methoxy-1-methylharnstoff (« Chlorbromuron »), 3-(4-Bromphenyl)-1-methoxy-1-methylharnstoff (« Metobromuron »), 3-(3,4-Dichlorphenyl)-1-methoxy-1-methylharnstoff (« Linuron), 3-(4-Chlorphenyl)-1-methoxy-1-methylharnstoff (« Monolinuron »), 3-(3,4-Dichlorphenyl)-1,1-dimethylhanrstoff (« Diuron »), 3-(4-Chlorphenyl)-1,1-dimethylharnstoff (« Monuron »), 3-(3-Chlor-4-methoxyphenyl)-1,1-dimethylharnstoff (« Metoxuron ») ; Sulfonylharnstoffe wie beispielsweise N-(2-Chlorphenylsulfonyl)-N'-(4-methoxy-6-methyl-1,3,5-triazin-2-yl)-harnstoff, N-(2-Methoxycarbonylphenylsulfonyl)-N'-(4,6-dimethylpyrimidin-2-yl)-harnstoff, N-(2,5-Dichlorphenylsulfonyl)-N'-(4,6-dimethoxypyrimidin-2-yl)-harnstoff, N-(2-(2-butenyloxy)-phenyl-sulfonyl]-N'-(4-methoxy-6-methyl-1,3,5-triazin-2-yl)-harnstoff sowie die in den europäischen Patentpublikationen 44808 und 44809 genannten Sulfonylharnstoffe ;

Chloracetamide : N-[1-Isopropyl-2-methylpropen-1-yl-(1)]-N-(2'-methoxyäthyl)-chloracetamid.

Diphenyläther und Nitrodiphenyläther : 2,4-Dichlorphenyl-4'-nitrophenyläther (« Nitrofen »), 2-Chlor-1-(3'-äthoxy-4'-nitrophenoxy)-4-trifluormethyl-benzol (« Oxyfluorfen »), 2', 4'-Dichlorphenyl-3-methoxy-4-nitrophenyl-äther (« Chlormethoxynil »), 2-[4'-(2'', 4''-Dichlorphenoxy)-phenoxy) propionsäure-methylester, N-(2'-Phenoxyäthyl)-2-[5'-chlor-4''-trifluormethylphenoxy)-phenoxy]-propionsäureamid, 2-[2-Nitro-5-(2-chlor-4-trifluormethylphenoxy)-phenoxy]-propionsäure-2-methoxyäthylester ; 2-Chlor-4-trifluormethylphenyl-3'-oxazolin-2'-yl-4'-nitrophenyläther ;

Benzoesäurederivate : Methyl-5-(2', 4'-dichlorphenoxy)-2-nitrobenzoat (« Bifenox »), 5-(2'-Chlor-4'-trifluormethylphenoxy)-2-nitrobenzoesäure (« Acifluorfen »), 2,6-Dichlorbenzonitril (« Dichlobenil »).

Nitroaniline : 2,6-Dinitro-N,N-dipropyl-4-trifluormethylanilin (« Trifluralin »), N-(1'-Aethylpropyl)-2,6-dinitro-3,4-xylidin (« Pendimethalin »).

Oxadiazolone : 5-tert.-Butyl-3-(2', 4'-dichlor-5'-isopropoxyphenyl)-1,3,4-oxadiazol-2-on (« Oxadiazon »).

Phosphate : S-2-Methylpiperidino-carbonylmethyl-O,O-dipropyl-phosphorodithioat (« Piperophos »).

Pyrazole : 1,3-Dimethyl-4-(2', 4'-dichlorbenzoyl)-5-(4'-tolysulfonyloxy)-pyrazol.

Ferner α-(Phenoxy-phenoxy)-propionsäurederivate sowie α-(Pyridyl-2-oxy-phenoxy)-propionsäurederivate.

Die angewendete Menge der Gegenmittel, sofern sie nicht auf die Samen gebeizt wird, schwankt zwischen etwa 0,01 und etwa 5 Gewichtsteilen pro Gewichtsteil Herbizid. Man ermittelt von Fall zu Fall, d. h. je nach verwendetem Herbizid-Typ, welches Verhältnis in Bezug auf optimale Wirkung bei der speziellen Kulturpflanze das geeignetste ist.

Die Verbindungen der Formel I werden in unveränderter Form oder vorzugweise zusammen mit den in der Formulierungstechnik üblichen Hilfsmitteln eingesetzt und werden daher z. B. zu Emulsionskonzentraten, direkt versprühbaren oder verdünnbaren Lösungen, verdünnten Emulsionen, Spritzpulvern, löslichen Pulvern, Stäubemitteln, Cranulaten, auch Verkapselungen in z. B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d. h. die den Wirkstoff der Formel I, einen festen oder flüssigen Zusatzstoff und das Herbizid enthaltenden Mittel, Zubereitungen oder Zusammensetzungen werden in bekannter Weise hergestellt, z. B. durch inniges Vermischen und/oder Vermahlen der Wirkstoffe mit Streckmitteln, wie z. B. mit Lösungsmitteln, festen Trägerstoffen, und gegebenenfalls oberflächenaktiven Verbindungen (Tensiden).

Als Lösungsmittel können in Frage kommen : Aromatische Kohlenwasserstoffe, bevorzugt die Fraktionen $C_8$ bis $C_{12}$, wie z. B. Xylolgemische oder substituierte Naphthaline, Phthalsäureester wie Dibutyl- oder Di-octylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid oder Dimethylformamid, sowie gegebenenfalls epoxydierte Pflanzenöle wie epoxydiertes Kokosnussöl oder Sojaöl ; oder Wasser.

Als feste Trägerstoffe, z. B. für Stäubemittel und dispergierbare Pulver, werden in der Regel natürliche Gesteinsmehle verwendet, wie Calcit, Talkum, Kaolin, Montmorrillonid oder Attapulgit. Zur Verbesserung der physikalischen Eigenschaften können auch hochdisperse Kieselsäure oder hochdisperse saugfähige Polymerisate zugesetzt werden. Als gekörnte, adsorptive Granulatträger kommen poröse Typen wie z. B. Bimsstein, Ziegelbruch, Sepiolit oder Bentonit, als nicht sorptive Trägermaterialien z. B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen wie wasserlösliche synthetische oberflächenaktive Verbindungen sein.

Als Seifen sind z. B. die Alkali-, Erdalkali- oder gegebenenfalls substituierten Ammoniumsalze von höheren Fettsäuren ($C_{10}$-$C_{22}$), wie z. B. die Na- oder K-Salze der Oel- oder Stearinsäure, oder von natürlichen Fettsäuregemischen, die z. B. aus Kokosnuss- oder Talgöl gewonnen werden können. Ferner sind auch die Fettsäure-methyl-taurin-salze zu erwähnen.

Häufiger werden jedoch sog. synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali oder gegebenenfalls substituierte Ammoniumsalze vor und weisen einen Alkylrest mit 8 bis 22 C-Atomen auf, wobei Alkyl auch den Alkylteil von Acylresten einschliesst, z. B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyd-Addukten. Die sulfonierten Benzimidazolderivate enthalten vorzugsweise 2 Sulfonsäuregruppen und einen Fettsäurerest mit 8-22 C-Atomen. Alkylarylsulfonate sind z. B. die Na-, Ca- oder Triäthanolaminsalze der Dodecylbenzolsulfonsäure, der Dibutylnaphthalinsulfonsäure, oder eines Naphthalinsulfonsäure-Formaldehydkondensationsproduktes.

Ferner kommen auch entsprechende Phosphate wie z. B. Salze des Phosphorsäureesters eines p-Nonylphenol-(4-14)-Aethylenoxyd-Adduktes oder Phospholipide in Frage.

Als nichtionisches Tensid kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 1 000 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol-Einheit 1 bis 5 Aethylenglykoleinheiten.

Als Beispiele nichtionischer Tenside seien Nonylphenolpolyäthoxyäthanole, Ricinusölpolyglycoläther, Polypropylen-Polyäthylenoxyaddukte, Tributylphenoxypolyäthoxyäthanol, Polyäthylenglykol und Octylphenoxypolyäthoxyäthanol erwähnt.

Ferner kommen auch Fettsäureester von Polyoxyäthylensorbitan wie das Polyoxyäthylensorbitantrioleat in Betracht.

Bei den kationischen Tensiden handelt es sich vor allem um quartäre Ammoniumsalze, welche als N-Substituenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z. B. das Stearyltrimethylammoniumchlorid oder das Benzyldi(2-chloräthyl) äthylammoniumbromid.

Die in der Formulierungstechnik gebräuchlichen Tenside sind u. a. in folgenden Publikationen beschrieben :

« Mc Cutcheon's Detergents and Emulsifiers Annual »

Mc Publishing Corp., Ringwood, New Jersey, 1979
J. and M. Ash, « Encyclopedia of Surfatants » Vol : III, Chemical Publishing Co., Inc. New York, 1980/81
H. Stache « Tensid Taschenbuch » 2. Aufl. C. Hanser, Verlag München und Wien.

Solche Zubereitungen enthalten in der Regel 0,1 bis 95 %, insbesondere 0,1 bis 80 %, Wirkstoff der Formel I, 1 bis 99,9 % eines festen oder flüssigen Zusatzstoffes und 0 bis 25 %, insbesondere 0,1 bis 25 % eines Tensides.

Insbesondere setzen sich bevorzugte Formulierungen folgendermassen zusammen : (% = Gewichtsprozent)

| | |
|---|---|
| Emulgierbare Konzentrate | |
| Aktiver Wirkstoff : | 1 bis 20 %, bevorzugt 5 bis 10 % |
| oberflächenaktives Mittel : | 5 bis 30 %, vorzugsweise 10 bis 20 % |
| flüssiges Trägermittel : | 50 bis 94 %, vorzugsweise 70 bis 85 %. |
| Stäube | |
| Aktiver Wirkstoff : | 0,1 bis 10 %, vorzugsweise 0,1 bis 1 % |
| festes Trägermittel : | 99,9 bis 90 %, vorzugsweise 99,9 bis 99 %. |
| Suspension-Konzentrate | |
| Aktiver Wirkstoff : | 5 bis 75 %, vorzugsweise 10 bis 50 % |
| Wasser : | 94 bis 25 %, vorzugsweise 90 bis 30 % |
| oberflächenaktives Mittel : | 1 bis 40 %, vorzugsweise 2 bis 30 %. |
| Benetzbare Pulver | |
| Aktiver Wirkstoff : | 0,5 bis 90 %, vorzugsweise 1 bis 80 % |
| oberflächenaktives Mittel : | 0,5 bis 20 %, vorzugsweise 1 bis 15 % |
| festes Trägermittel : | 5 bis 95 %, vorzugsweise 15 bis 90 %. |
| Granulate | |
| Aktiver Wirkstoff : | 0,5 bis 30 %, vorzugsweise 3 bis 15 % |
| festes Trägermittel : | 99,5 bis 70 %, vorzugsweise 97 bis 85 %. |

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,01 bis 10 kg AS/ha, vorzugsweise 0,025 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

In den folgenden Beispielen sind die Temperaturen in Celsiusgraden °C, die Drücke in Millibar mb angegeben.

## Beispiel 1

Herstellung von Chloracetylaminomethyl-phosphonsäurediethylester

$$(C_2H_5O)_2\underset{\underset{O}{\|}}{P}CH_2\text{-}NH\text{-}COCH_2Cl$$

Zu einer Lösung von 66,4 g (0,4 mol) Aminomethanphosphonsäurediethylester und 56 ml (0,4 mol) Triethylamin in 600 ml Benzol werden unter Rühren langsam 32 ml (0,4 mol) Chloracetylchlorid zugetropft. Das Reaktionsgemisch erwärmt sich dabei. Durch Kühlen wird die Temperatur bei 40 °C gehalten. Nach dem Zutropfen lässt man 1 Stunde bei Raumtemperatur anrühren. Das ausgefallene Triethylaminhydrochlorid wird anschliessend abfiltriert und das Filtrat am Vakuum eingeengt. Das zurückbleibende hellbraune Oel wird aus Ether kristallisiert. Man erhält 88 g des obigen Esters, welcher einen Schmelzpunkt von 62-65 °C aufweist.

## Beispiel 2

Herstellung von Chloracetylaminomethyl-phosphonsäure-diisopropylester

$$(isoC_3H_7O)_2PO\text{-}CH_2\text{-}NH\text{-}CO\text{-}CHCl_2$$

15 g Aminomethanphosphonsäurediisopropylester und 11,2 ml Triethylamin werden in 200 ml Benzol gelöst. Unter Rühren lässt man langsam 7,8 ml Dichloressigsäurechlorid zutropfen. Die Temperatur steigt

dabei auf 41 °C an. Nach dem alles zugetropft ist, lässt man noch 1 Stunde bei Raumtemperatur ausrühren. Das ausgefallene Triethylaminhydrochlorid wird anschliessend abfiltriert, das Filtrat am Vakuum eingeengt und das zurückbleibende Oel aus Ether kristallisiert. Nach dem Kristallisieren aus Diisopropylether erhält man 18,7 g des obigen Esters, welcher bei 79-81 °C schmilzt.

Beispiel 3

Herstellung von Chloracetylamino-2-propyl-phosphonsäurediethylester

$$(C_2H_5O)_2\underset{\underset{O}{\|}}{P}-C(CH_3)_2-NH-COCH_2Cl$$

zu 9.8 g 2-Aminopropyl-2-phosphonsäurediethylester, gelöst in 50 ml Ether gibt man bei 5-10 °C 7.7 ml Triethylamin und 9.4 g Chloressigsäureanhydrid, welche in 50 ml Ether gelöst sind. Dann wird 2 Stunden bei 20 °C nachgerührt. Die gelbe Suspension wird 3 Mal mit je 50 ml Wasser extrahiert, die organische Phase über Natriumsulfat getrocknet, filtriert und eingedampft. Man erhält 4.8 g Endprodukt, das nach dem Umkristallisieren aus Diisopropylether bei 93-95 °C schmilzt. Durch Extraktion der wässerigen Phase mit Ether erhält man weitere 4.6 g Endprodukt, welches auch bei 93-95 °C schmilzt. (Ausbeute 8.9 g 65 % der Theorie).

In analoger Weise zu diesen Beispielen werden folgende Verbindungen hergestellt :

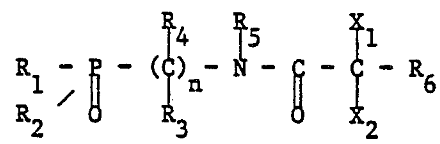

| No. | $R_1$ $R_2$ | $-[C(R_3)R_4]_n-$ | $R_5$ | $-C(X_1)(X_2)R_6$ | phys.Daten |
|---|---|---|---|---|---|
| 1 | $(C_2H_5O)_2$ | $CH_2$ | H | $CH_2Cl$ | Smp.62-65° |
| 2 | $(isoC_3H_7O)_2$ | $CH_2$ | H | $CHCl_2$ | Smp.79-81° |
| 3 | $(C_2H_5O)_2$ | $C(CH_3)_2$ | H | $CH_2Cl$ | Smp.93-95° |
| 4 | $(C_2H_5O)_2$ | $CH_2$ | H | $CHCl_2$ | Sdp.174-176°/0.1 mbar. |
| 5 | $(isoC_3H_7O)_2$ | $CH_2$ | H | $CH_2Cl$ | Smp.70-71° |
| 6 | $(C_2H_5O)_2$ | $CH_2$ | H | $CH_2Br$ | Smp.88-90° |
| 7 | $(isoC_3H_7O)_2$ | $CH_2$ | H | $CH_2Br$ | Smp.85-88° |
| 8 | $(C_2H_5O)_2$ | $(C_2H_5O)_2P(O)CH$ | H | $CH_2Cl$ | Smp.54-57° |
| 9 | $(C_2H_5O)_2$ | Cyclohexylen | H | $CH_2Cl$ | Smp.80-100° |
| 10 | $(C_2H_5O)_2$ | $C(CH_3)_2$ | Benzyl | $CH_2Cl$ | Oel |
| 11 | $(C_2H_5O)_2$ | $(C_2H_5O)_2P(O)CH$ | H | $CHCl_2$ | Smp. 78-82° |

(Siehe Tabelle Seite 11 ff.)

| No. | $R_1$ $R_2$ | $-[C(R_3)R_4]_n-$ | $R_5$ | $X_1$<br>$-CR_6$<br>$X_2$ | |
|---|---|---|---|---|---|
| 12 | $(isoC_3H_7O)_2$ | $CH_2$ | $CH_3$ | $CH_2Cl$ | oranges Oel |
| 13 | $(isoC_3H_7O)_2$ | $CH_2$ | $CH(CH_3)_2$ | $CH_2Cl$ | |
| 14 | $(isoC_3H_7O)_2$ | $CH_2$ | Cyclopropyl | $CH_2Cl$ | |
| 15 | $(isoC_3H_7O)_2$ | $CH_2$ | $CH_2CH=CH_2$ | $CH_2Cl$ | Oel |
| 16 | $(isoC_3H_7O)_2$ | $CH_2$ | Benzyl | $CH_2Cl$ | |
| 17 | $(isoC_3H_7O)_2$ | $CH_2$ | $CH_3$ | $CHCl_2$ | oranges Oel |
| 18 | $(isoC_3H_7O)_2$ | $CH_2$ | $CH(CH_3)_2$ | $CHCl_2$ | |
| 19 | $(isoC_3H_7O)_2$ | $CH_2$ | Cyclopropyl | $CHCl_2$ | |
| 20 | $(isoC_3H_7O)_2$ | $CH_2$ | $CH_2CH=CH_2$ | $CHCl_2$ | Oel |
| 21 | $(isoC_3H_7O)_2$ | $CH_2$ | Benzyl | $CHCl_2$ | |
| 22 | $(nC_4H_9O)_2$ | $CH_2$ | $CH_3$ | $CH_2Cl$ | |
| 23 | $(nC_4H_9O)_2$ | $CH_2$ | $CH(CH_3)_2$ | $CH_2Cl$ | |
| 24 | $(nC_4H_9O)_2$ | $CH_2$ | Cyclopropyl | $CH_2Cl$ | |
| 25 | $(nC_4H_9O)_2$ | $CH_2$ | $CH_2CH=CH_2$ | $CH_2Cl$ | |
| 26 | $(nC_4H_9O)_2$ | $CH_2$ | Benzyl | $CH_2Cl$ | |
| 27 | $(n-C_4H_9O)_2$ | $CH_2$ | $CH_3$ | $CHCl_2$ | |
| 28 | $(n-C_4H_9O)_2$ | $CH_2$ | $C(CH_3)_2$ | $CHCl_2$ | |
| 29 | $(n-C_4H_9O)_2$ | $CH_2$ | Cyclopropyl | $CHCl_2$ | |
| 30 | $(n-C_4H_9O)_2$ | $CH_2$ | $CH_2CH=CH_2$ | $CHCl_2$ | |
| 31 | $(n-C_4H_9O)_2$ | $CH_2$ | Benzyl | $CHCl_2$ | |
| 32 | $(CH_3O)_2$ | Cyclopentylen | $C_4H_9n$ | $CH_2Cl$ | |
| 33 | $CH_3O$, $C_2H_5O$ | Cyclohexylen | $C_4H_9n$ | $CH_2Cl$ | |
| 34 | $(C_2H_5O)_2$ | Cycloheptylen | $C_4H_9n$ | $CH_2Cl$ | |
| 35 | $(C_2H_5O)_2$ | α-Perhydronaphthylen | $C_3H_7n$ | $CH_2Cl$ | |

(Fortsetzung)

| No. | $R_1$ $R_2$ | $-[C(R_3)R_4]_n-$ | $R_5$ | $X_1$<br>$-CR_6$<br>$X_2$ |
|---|---|---|---|---|
| 36 | $CH_3O$ $CH_3$ | Cyclopentylen | $CH_3$ | $CH_2Cl$ |
| 37 | $C_2H_5$ $CH_3$ | Cyclopropylen | $CH_3$ | $CH_2Cl$ |
| 38 | $(CH_3)_2$ | Cycloheptylen | $CH_3$ | $CH_2Cl$ |
| 39 | $(C_2H_5)_2$ | Cyclohexylen | $CH_3$ | $CH_2Cl$ |
| 40 | $CH_3$, $C_2H_5O$ | Cyclopentylen | $CH_3$ | $CH_2Cl$ |
| 41 | $CH_3$, $nC_3H_7O$ | Cyclopentylen | $CH_3$ | $CH_2Cl$ |
| 42 | $(iso\text{-}C_3H_7O)_2$ | $C(H)CH_3$ | Benzyl | $CH_2Cl$ |
| 43 | $(iso\text{-}C_3H_7O)_2$ | $C(CH_3)_2$ | Benzyl | $CH_2Cl$ |
| 44 | $CH_3$, $C_2H_5O$ | $C(CH_3)$cyclopropylen | H | $CH_2Cl$ |
| 45 | $CH_3$, $C_2H_5O$ | $C(CH_3)C_2H_5$ | H | $CH_2Cl$ |
| 46 | $CH_3$, $_nC_4H_9O$ | $C(CH_3)C_2H_5$ | H | $CH_2Cl$ |
| 47 | $CH_3$, $C_2H_5O$ | $C(CH_3)_2$ | H | $CH_2Cl$ |
| 48 | $C_2H_5$, $C_2H_5O$ | $C(CH_3)_2$ | Benzyl | $CH_2Cl$ |
| 49 | $C_2H_5$, $C_2H_5O$ | $C(CH_3)_2$ | H | $CH_2Cl$ |
| 50 | $(C_2H_5)_2$ | $C(CH_3)_2$ | Benzyl | $CH_2Cl$ |
| 51 | $(CH_3)_2$ | $CH_2$ | H | $CH_2Cl$ |

(Fortsetzung)

| No. | $R_1$ $R_2$ | $-[C(R_3)R_4]_n-$ | $R_5$ | $X_1$<br>$-CR_6$<br>$X_2$ | |
|---|---|---|---|---|---|
| 52 | $(CH_3)_2$ | $CH_2$ | H | $CHCl_2$ | |
| 53 | $(C_2H_5)_2$ | $CH_2$ | H | $CHCl_2$ | |
| 54 | $CH_3$, $C_2H_5$ | $CH_2$ | H | $CHCl_2$ | |
| 55 | $CH_3$, i-$C_4H_9O$ | $C(CH_3)(C_2H_5)$ | H | $CHCl_2$ | gelb-braunes Harz |
| 56 | H, $C_2H_5O$ | $CH_2CH_2$ | Benzyl | $CH_2Cl$ | braunes Harz |
| 57 | H, $C_2H_5O$ | $CH_2CH_2$ | Benzyl | $CHCl_2$ | braunes Harz |
| 58 | (iso $C_3H_7O)_2$ | $CH_2$ | $CH_2CH=CH_2$ | $CH_2I$ | Oel |
| 59 | $(C_2H_5O)_2$ | $CH_2$ | $CH(CH_3)_2$ | $CH_2Cl$ | Oel |
| 60 | $(C_2H_5O)_2$ | $CH_2$ | $CH(CH_3)_2$ | $CHCl_2$ | Smp 84-86° |
| 61 | $(C_2H_5O)_2$ | $CH_2$ | Cyclopropyl | $CH_2Cl$ | Oel |
| 62 | $(C_2H_5O)_2$ | $CH_2$ | Cyclopropyl | $CHCl_2$ | Oel |
| 63 | $(C_2H_5O)_2$ | $CH_2$ | $CH_2CH=CH_2$ | $CH_2Cl$ | Oel |
| 64 | $(CH_3O)_2$ | $CH_2$ | H | $CH_2Cl$ | $n_D^{20}$ 1.4710 |
| 65 | $(C_2H_5O)_2$ | $CH_2$ | H | $CHClCH_3$ | $n_D^{20}$ 1.4630 |
| 66 | $(C_2H_5O)_2$ | $CH_2$ | H | $CHClCH_2Cl$ | $n_D^{20}$ 1.4775 |
| 67 | $(C_2H_5O)_2$ | $CH_2$ | H | $CH_2CH_2Cl$ | $n_D^{20}$ 1.4709 |
| 68 | $(C_2H_5O)_2$ | $CH_2$ | H | $CH_2CH_2CH_2Cl$ | $n_D^{20}$ 1.4720 |
| 69 | $(C_2H_5O)_2$ | $CH_2$ | Benzyl | $CH_2Cl$ | $n_D^{20}$ 1.5136 |
| 70 | $(C_2H_5O)_2$ | $CH_2$ | Benzyl | $CHCl_2$ | Smp 56-60° |

(Siehe Fortsetzung Seite 14 f.)

(Fortsetzung)

| No | $R_1R_2$ | $-[C(R_3)R_4]_n-$ | $R_5$ | $X_1$<br>$-CR_6$<br>$X_2$ | |
|---|---|---|---|---|---|
| 71 | $(C_2H_5O)_2$ | $CH_2$ | $CH_2CF_3$ | $CH_2Cl$ | $n_D^{20}$ 1.4222 |
| 72 | $(C_2H_5O)_2$ | $CH_2$ | $CH_2CF_3$ | $CHCl_2$ | $n_D^{20}$ 1.4397 |
| 73 | (iso $C_3H_7O)_2$ | $CH_2$ | H | $CHClCH_3$ | $n_D^{20}$ 1.4563 |
| 74 | (iso $C_3H_7O)_2$ | $CH_2$ | H | $CHClCH_2Cl$ | $n_D^{20}$ 1.4696 |
| 75 | (iso $C_3H_7O)_2$ | $CH_2$ | H | $CH_2CH_2Cl$ | $n_D^{20}$ 1.4593 |
| 76 | (iso $C_3H_7O)_2$ | $CH_2$ | H | $CH_2CH_2CH_2Cl$ | $n_D^{20}$ 1.4596 |
| 77 | $(C_2H_5O)_2$ | $(C_2H_5O)_2POCH=$ | H | $CHClCH_3$ | $n_D^{20}$ 1.4612 |
| 78 | $(C_2H_5O)_2$ | $(C_2H_5O)_2POCH=$ | H | $CHClCH_2Cl$ | $n_D^{20}$ 1.4691 |
| 79 | $(C_2H_5O)_2$ | $(C_2H_5O)_2POCH=$ | H | $CH_2CH_2Cl$ | Smp 71-74° |
| 80 | $(C_2H_5O)_2$ | $(C_2H_5O)_2POCH=$ | H | $CH_2CH_2CH_2Cl$ | $n_D^{20}$ 1.4711 |
| 81 | $(C_2H_5O)_2$ | $CH_2CH_2$ | H | $CH_2Cl$ | Oel |
| 82 | $(C_2H_5O)_2$ | $CH_2CH_2$ | H | $CHCl_2$ | $n_D^{20}$ 1.4754 |
| 83 | $CH_3$,iso$C_3H_7O$ | $CH_2$ | H | $CH_2Cl$ | Smp 67-69° |
| 84 | $CH_3$,iso$C_3H_7O$ | $CH_2$ | H | $CHCl_2$ | Smp 105-107° |
| 85 | (n $C_4H_9O)_2$ | Cycloheptylen | | $CH_2Cl$ | Oel |
| 86 | (n $C_4H_9O)_2$ | Cycloheptylen | | | Oel |
| 87 | $CH_3$,$C_2H_5O$ | $CH_2$ | H | $CH_2Cl$ | $n_D^{20}$ 1.4878 |
| 88 | $CH_3$,$C_2H_5O$ | $CH_2$ | H | $CHCl_2$ | $n_D^{20}$ 1.4907 |
| 89 | (iso $C_3H_7O)_2$ | Cyclopropylen | H | $CH_2Cl$ | Smp 84-85° |
| 90 | (iso $C_3H_7O)_2$ | Cyclopropylen | H | $CHCl_2$ | Smp 96-97° |
| 91 | $(C_2H_5O)_2$ | $CH_2$ | H | $CCl=CCl_2$ | Oel |
| 92 | $(C_2H_5O)_2$ | $CH_2$ | H | $CHClCH_3$ | Oel |
| 93 | $(C_2H_5O)_2$ | $CH_2$ | H | $CHClCH_3$ | Oel |
| 94 | $(C_2H_5O)_2$ | $CH_2$ | H | $CCl=CCl_2$ | Oel |
| 95 | $(HO)_2$ | Cyclopropylen | H | $CHCl_2$ | Smp 175.177° |

Beispiel 4

Formulierungsbeispiele für Wirkstoffe der Formel I oder Mischungen dieser Wirkstoffe mit Herbiziden

a) Spritzpulver

| | a) | b) | c) |
|---|---|---|---|
| Wirkstoff der Formel I oder Mischung mit Herbizid | 20 % | 60 % | 0,5 % |
| Na-Ligninsulfonat | 5 % | 5 % | 5 % |
| Na-Laurylsulfat | 3 % | - | - |
| Na-Diisobutylnaphthalinsulfonat | - | 6 % | 6 % |
| Octylphenolpolyäthylenglykoläther (7-8 Mol AeO) | - | 2 % | 2 % |
| Hochdisperse Kieselsäure | 5 % | 27 % | 27 % |
| Kaolin | 67 % | - | - |
| Natriumchlorid | - | - | 59,5 % |

Der Wirkstoff wird mit den Zusatzstoffen gut vermischt und in einer geeigneten Mühle gut vermahlen. Man erhält Spritzpulver, die sich mit Wasser zu Suspensionen jeder gewünschten Konzentration verdünnen lassen.

b) Emulsion-Konzentrat

| | a) | b) |
|---|---|---|
| Wirkstoff der Formel I oder Mischung mit Herbizid | 10 % | 1 % |
| Octylphenolpolyäthylenglykoläther (4-5 Mol AeO) | 3 % | 3 % |
| Ca-Dodecylbenzolsulfonat | 3 % | 3 % |
| Ricinusölpolyglykoläther (36 Mol AeO) | 4 % | 4 % |
| Cyclohexanon | 30 % | 10 % |
| Xylolgemisch | 50 % | 79 % |

Aus diesem Konzentrat können durch Verdünnen mit Wasser Emulsionen jeder gewünschten Konzentration hergestellt werden.

c) Stäubemittel

| | a) | b) |
|---|---|---|
| Wirkstoff der Formel I oder Mischung mit Herbizid | 0,1 % | 1 % |
| Talkum | 99,9 % | - |
| Kaolin | - | 99 % |

Man erhält anwendungsfertige Stäubemittel, indem der Wirkstoff mit dem Träger vermischt und auf einer geeigneten Mühle vermahlen wird.

d) Extruder Granulat

| | a) | b) |
|---|---|---|
| Wirkstoff der Formel I oder Mischung mit Herbizid | 10 % | 1 % |
| Na-Ligninsulfonat | 2 % | 2 % |
| Carboxymethylcellulose | 1 % | 1 % |
| Kaolin | 87 % | 96 % |

Der Wirkstoff wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | |
|---|---|
| Wirkstoff der Formel I oder Mischung mit Herbizid | 3 % |
| Polyäthylenglykol (MG 200) | 3 % |
| Kaolin | 94 % |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

| f) Suspensions-Konzentrat | a) | b) |
|---|---|---|
| Wirkstoff der Formel I oder Mischung mit Herbizid | 40 % | 5 % |
| Aethylenglykol | 10 % | 10 % |
| Nonylphenolpolyäthylenglykoläther (15 Mol AeO) | 6 % | 1 % |
| Na-Ligninsulfonat | 10 % | 5 % |
| Carboxymethylcellulose | 1 % | 1 % |
| 37%ige wässrige Formaldehyd-Lösung | 0,2 % | 0,2 % |
| Silikonöl in Form einer 75%igen wässrigen Emulsion | 0,8 % | 0,8 % |
| Wasser | 32 % | 77 % |

Der fein gemahlene Wirkstoff wird mit den Zusatzstoffen innig vermischt. Man erhält so ein Suspensions-Konzentrat, aus welchem durch Verdünnen mit Wasser Suspensionen jeder gewünschten Konzentration hergestellt werden können.

g) Salzlösung

| | |
|---|---|
| Wirkstoff der Formel I oder Mischung mit Herbizid | 5 % |
| Isopropylamin | 1 % |
| Octylphenolpolyäthylenglykoläther (78 Mol AeO) | 3 % |
| Wasser | 91 % |

Biologische Beispiele

Die Fähigkeit der Verbindungen der Formel I, Kulturpflanzen vor der phytotoxischen Wirkung starker Herbizide zu schützen, kann aus den folgenden Beispielen ersehen werden. In den Versuchsbeschreibungen werden die Verbindungen der Formel I als Antidote (Gegenmittel) bezeichnet.

Beispiel 5

Versuch mit Herbizid und Gegenmittel in Mais. Herbizid und Gegenmittel werden zusammen als Tankmischung im Vorauflaufverfahren appliziert.

Plastikcontainer (25 cm lang × 17 cm breit × 12 cm hoch) werden mit sandiger Lehmerde gefüllt und Maissamen der Sorte LG 5 eingesät. Nach dem Bedecken der Samen wird die als Safener zu prüfende Substanz zusammen mit dem Herbizid in verdünnter Lösung als Tankmischung auf die Bodenoberfläche gesprüht. 21 Tage nach der Applikation wird die Schutzwirkung des Safeners in Prozent ausgewertet. Als Referenz dienen dabei die mit dem Herbizid allein behandelten Pflanzen (keine Schutzwirkung) sowie die vollständig unbehandelte Kontrolle. (100 %ige Schutzwirkung).

Die Resultate sind unten zufammengefasst.

Herbizid : N-Chloracetyl-N-(2-methoxy-1-methyläthyl)-2,6-dimethylanilin

| Gegenmittel No. | kg/ha | Herbizid kg/ha | relative Schutzwirkung in % |
|---|---|---|---|
| 1 | 3 | 6 | 63 |
| 1 | 1,5 | 6 | 75 |
| 1 | 0.75 | 6 | 63 |
| 1 | 2 | 4 | 50 |
| 1 | 1 | 4 | 63 |
| 1 | 0,5 | 4 | 50 |
| 4 | 3 | 6 | 50 |
| 4 | 1.5 | 6 | 63 |
| 4 | 0.75 | 6 | 50 |
| 4 | 2 | 4 | 50 |
| 4 | 1 | 4 | 38 |
| 4 | 0.5 | 4 | 50 |

**Patentansprüche**

1. Ein Mittel zum Schützen von Kulturpflanzen vor der phytotoxischen Wirkung von Herbiziden dadurch gekennzeichnet, dass es neben inertem Trägermaterial und dem Herbizid als antagonisierenden Wirkstoff ein Halogenacyl-aminoalkyl-phosphonat, -phosphinat oder phosphinoxid der Formel I enthält

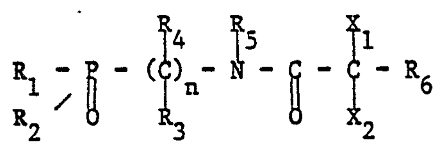

(I)

worin

$R_1$ $C_1$-$C_4$-Alkyl, $C_1$-$C_4$-Alkoxy, $C_2$-$C_4$-Alkenyloxy, $C_2$-$C_4$-Alkinyloxy, $C_1$-$C_4$-Halogenalkoxy, $C_2$-$C_8$-Alkoxyalkoxy oder $C_1$-$C_4$-Cyanoalkoxy,

$R_2$ Wasserstoff oder einen Substituenten wie $R_1$,

$R_3$ und $R_4$ unabhängig voneinander je Wasserstoff, $C_1$-$C_4$-Alkyl, oder eines davon auch einen Rest

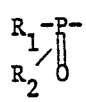

$R_3$ und $R_4$ zusammen mit dem Kohlenstoffatom an das sie gebunden sind auch einen $C_3$-$C_{11}$-Cycloalkylrest,

$R_5$ Wasserstoff, $C_1$-$C_4$-Alkyl, $C_3$-$C_7$-Cycloalkyl, $C_2$-$C_4$-Alkenyl, $C_2$-$C_4$-Alkinyl, $C_2$-$C_8$-Alkoxyalkyl, $C_1$-$C_4$-Halogenalkyl oder Aralkyl,

$R_6$ Wasserstoff oder $C_1$-$C_4$-Alkyl

$X_1$ und $X_2$ beide Halogen oder eines davon auch Wasserstoff und

n eine Zahl 1, 2 oder 3 bedeuten.

2. Mittel gemäss Anspruch 1, dadurch gekennzeichnet, dass es als Wirkstoff ein Halogenacyl-aminoalkyl-phosphonat der Formel I, Anspruch 1, worin

$R_1$ und $R_2$ je $C_1$-$C_4$-Alkoxy

$R_3$ und $R_4$ je Wasserstoff oder Methyl

$R_5$ Wasserstoff, $C_1$-$C_4$-Alkyl oder Benzyl

$R_6$ Wasserstoff

$X_1$ und $X_2$ je Chlor oder eines davon Wasserstoff und
n die Zahl 1 bedeuten.

3. Mittel gemäss Anspruch 1, dadurch gekennzeichnet, dass es als Wirkstoff Chloracetylaminomethyl-phosphonsäure-diethylester enthält.

4. Mittel gemäss Anspruch 1, dadurch gekennzeichnet, dass es als Wirkstoff Dichloracetylaminoethyl-phosphonsäure-diethylester enthält.

5. Neue Halogenacyl-aminoalkyl-phosphonate, -phosphinate oder -phosphinoxide der Formel I

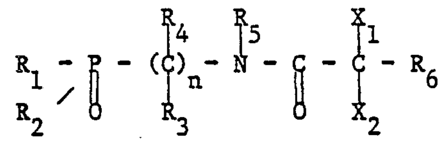

(I)

worin

$R_1$ $C_1$-$C_4$-Alkyl, $C_1$-$C_4$-Alkoxy, $C_2$-$C_4$-Alkenyloxy, $C_2$-$C_4$-Alkinyloxy, $C_1$-$C_4$-Halogenalkoxy, $C_2$-$C_8$-Alkoxyalkoxy oder $C_1$-$C_4$-Cyanoalkoxy

$R_2$ Wasserstoff oder einen Substituenten wie $R_1$

$R_3$ und $R_4$ unabhängig voneinander je Wasserstoff, $C_1$-$C_4$-Alkyl oder eines davon auch einen Rest

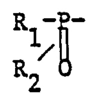

$R_3$ und $R_4$ zusammen mit dem Kohlenstoffatom an das sie gebunden sind auch einen $C_3$-$C_{11}$-Cycloalkylrest

$R_5$ Wasserstoff, $C_1$-$C_4$-Alkyl, $C_3$-$C_7$-Cycloalkyl, $C_2$-$C_4$-Alkenyl, $C_2$-$C_4$-Alkinyl, $C_2$-$C_8$-Alkoxyalkyl, $C_1$-$C_4$-Halogenalkyl oder Aralkyl,

$R_6$ Wasserstoff oder $C_1$-$C_4$-Alkyl,

$X_1$ und $X_2$ je Halogen oder eines davon auch Wasserstoff und

n eine Zahl 1, 2 oder 3 bedeuten, mit der Massgabe, dass $R_1$ und $R_2$ nicht beide Methoxy oder Aethoxy sein können, wenn n = 1, $R_3$, $R_4$ und $R_6$ je Wasserstoff

$R_5$ Wasserstoff oder Methyl und $X_1$ und $X_2$ je Chlor oder eines davon auch Wasserstoff.

6. Neue Halogenacyl-aminoalkyl-phosphonate der Formel I gemäss Anspruch 5, worin

$R_1$ und $R_2$ je $C_3$-$C_4$-Alkoxy, $C_2$-$C_4$-Alkenyloxy, $C_2$-$C_4$-Alkinyloxy, $C_1$-$C_4$-Halogenalkoxy, $C_2$-$C_8$-Alkoxyalkoxy oder $C_1$-$C_4$-Cyanoalkoxy und

$R_3$, $R_4$, $R_5$, $R_6$, $X_1$, $X_2$ und n die im Anspruch 5 gegebene Bedeutung haben.

7. Neue Halogenacylaminoalkylphosphonate der Formel I gemäss Anspruch 5, worin

$R_1$ und $R_2$ je $C_1$-$C_4$-Alkoxy, $C_2$-$C_4$-Alkenyloxy, $C_2$-$C_4$-Alkinyloxy, $C_1$-$C_4$-Halogenalkoxy, $C_2$-$C_8$-Alkoxyalkoxy oder $C_1$-$C_4$-Cyanoalkoxy,

$R_3$ und $R_4$ je $C_1$-$C_4$-Alkyl oder eines davon auch einen Rest

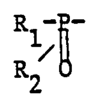

bedeuten, während $R_5$, $R_6$, $X_1$, $X_2$ und n die im Anspruch 5 gegebene Bedeutung haben.

8. Chloracetyl-aminoprop-2-yl-phosphonsäurediethylester gemäss Anspruch 5.

9. Chloracetyl-benzylaminoprop-2-yl-phosphonsäure-diethylester gemäss Anspruch 5.

10. Chloracetyl-aminomethyliden-diphosphonsäure-diethylester gemäss Anspruch 5.

11. Chloracetyl-amino-cyclohex-1-yl-phosphonsäure-diethylester gemäss Anspruch 5.

12. Neue Halogenacyl-aminoalkyl-phosphinate der Formel I gemäss Anspruch 5, worin

$R_1$ $C_1$-$C_4$-Alkoxy, $C_2$-$C_4$-Alkenyloxy, $C_2$-$C_4$-Alkinyloxy, $C_1$-$C_4$-Halogenalkoxy, $C_2$-$C_8$-Alkoxyalkoxo oder $C_1$-$C_4$-Cyanoalkoxy,

$R_2$ Wasserstoff oder $C_1$-$C_4$-Alkyl bedeuten,

während $R_3$, $R_4$, $R_5$, $R_6$, $X_1$, $X_2$ und n die im Anspruch 5 gegebene Bedeutung haben.

13. Neue Halogenacyl-aminoalkyl phosphinate der Formel I gemäss Anspruch 5, worin

$R_1$ $C_1$-$C_4$-Alkoxy

$R_2$ $C_1$-$C_4$-Alkyl

$R_3$ und $R_4$ je Wasserstoff oder Methyl,

$R_5$ Wasserstoff, $C_1$-$C_4$-Alkyl oder Benzyl,

$R_6$ Wasserstoff,

$X_1$ und $X_2$ je Chlor oder eines davon auch Wasserstoff und

n die Zahl 1 bedeuten.

14. Neue Halogenacyl-aminoalkyl-phosphinoxide der Formel I gemäss Anspruch 5, worin

$R_1$ $C_1$-$C_4$-Alkyl
$R_2$ Wasserstoff oder $C_1$-$C_4$-Alkyl bedeuten, während
$R_3$, $R_4$, $R_5$, $R_6$, $X_1$, $X_2$ und
n die im Anspruch 5 gegebene Bedeutung haben.

15. Neue Halogenacyl-aminoalkyl-phosphinoxide der Formel I gemäss Anspruch 5, worin
$R_1$ $C_1$-$C_4$-Alkyl,
$R_2$ Wasserstoff oder $C_1$-$C_4$-Alkyl,
$R_3$ und $R_4$ je Wasserstoff oder Methyl,
$R_5$ Wasserstoff, $C_1$-$C_4$-Alkyl oder Benzyl,
$R_6$ Wasserstoff,
$X_1$ und $X_2$ je Chlor oder eines davon auch Wasserstoff und
n die Zahl 1 bedeuten.

16. Verfahren zur Herstellung der Halogenacyl-aminoalkyl-phosphonate, -phosphinate und -phosphinoxide der Formel I gemäss Anspruch 5, dadurch gekennzeichnet, dass man ein Aminoalkylphosphonat, -phosphinat oder phospinoxid der Formel II

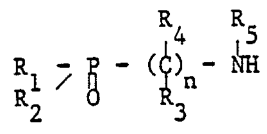
(II)

worin $R_1$, $R_2$, $R_3$, $R_4$, $R_5$ und n die im Anspruch 5 gegebene Bedeutung haben, in einem wasserfreien, inerten organischen Lösungsmittel, in Gegenwart der äquimolaren Menge einer organischen Base, mit der äquimolaren Menge eines Halogenacylhalogenides oder Halogenacylanhydrides der Formel III umsetzt

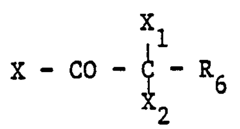
(III)

worin Y ein Halogenatom oder einen Rest

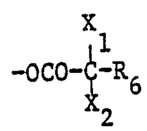

bedeutet, worin $R_6$ $X_1$ und $X_2$ die im Anspruch 5 gegebene Bedeutung haben und das Kondensationsprodukt aus dem Reaktionsgemisch isoliert.

17. Verfahren zum selektiven Bekämpfen von Unkräutern in Nutzpflanzen-Kulturen, dadurch gekennzeichnet, dass man die Kulturen oder deren Anbaufläche mit (a) einem Herbizid und (b) einer wirksamen Menge eines Halogenacyl-alkylamino-phosphonates, -phosphinates oder phosphinoxides gemäss Anspruch 1 als Gegenmittel behandelt.

18. Verwendung der Halogenacyl-alkylamino-phosphonate, -phosphinate oder -phosphinoxide der Formel I gemäss Anspruch 1 zum Schützen von Kulturpflanzen gegen die schädigende Wirkung von Herbiziden.

19. Verwendung der Halogenacyl-alkylamino-phosphonate, -phospinate oder -phosphinoxide der Formel I gemäss Anspruch 1 zum Schützen von Getreide-, Mais-, und Sorghum-Kulturen vor der Schädigung durch Halogenacetanilid- oder Thiolcarbamat Herbizide.

20. Verfahren zum Schützen von Kulturpflanzen vor Schäden, die bei der Applikation von Herbiziden auftreten, dadurch gekennzeichnet, dass man
a) die Anbaufläche für die Pflanze vor oder während der Applikation des Herbizids oder
b) den Samen oder die Stecklinge der Pflanzen oder die Pflanze selbst mit einer wirksamen Menge eines Halogenacyl-aminoalkyl-phosphonates, -phosphinates, oder -phosphinoxides der Formel I gemäss Anspruch 1 behandelt.

21. Saatgut von Nutzpflanzungen, welches mit einer wirksamen, Menge eines Halogenacyl-alkylamino-phosphonates, -phosphinates oder phosphinoxides gemäss Anspruch 1 behandelt worden ist.

**Claims**

1. An agent for protecting cultivated plants from the phytotoxic effects of herbicides, characterised in that it contains as antagonist active ingredient a haloacylaminoalkylphosphonate, haloacylaminoalkylphosphinate or haloacylaminoalkylphosphine oxide of the formula I

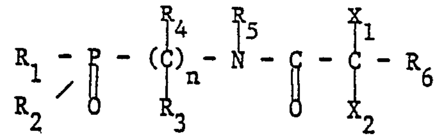

(I)

wherein

$R_1$ is $C_1$-$C_4$alkyl, $C_1$-$C_4$alkoxy, $C_2$-$C_4$alkenyloxy, $C_2$-$C_4$alkynyloxy, $C_1$-$C_4$haloalkoxy, $C_2$-$C_8$alkoxyalkoxy or $C_1$-$C_4$cyanoalkoxy,

$R_2$ is hydrogen or a substituent as defined for $R_1$,

$R_3$ and $R_4$ are each independently hydrogen, $C_1$-$C_4$alkyl or one of them is also a radical

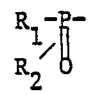

or

$R_3$ and $R_4$ taken together with the carbon atom to which they are attached are also a $C_3$-$C_{11}$cycloalkyl radical,

$R_5$ is hydrogen, $C_1$-$C_4$alkyl, $C_3$-$C_7$cycloalkyl, $C_2$-$C_4$alkenyl, $C_2$-$C_4$alkynyl, $C_2$-$C_8$alkoxyalkyl, $C_1$-$C_4$haloalkyl or aralkyl,

$R_6$ is hydrogen or $C_1$-$C_4$alkyl,

$X_1$ and $X_2$ are both halogen or one of them is also hydrogen, and

n is 1, 2 or 3,

together with inert carrier and the herbicide.

2. Agent according to claim 1, characterised in that it as active ingredient a haloacylaminoalkylphosphonate of the formula I, claim 1, wherein each of

$R_1$ and $R_2$ is $C_1$-$C_4$alkoxy, each of

$R_3$ and $R_4$ is hydrogen or methyl,

$R_5$ is hydrogen, $C_1$-$C_4$alkyl or benzyl,

$R_6$ is hydrogen, each of

$X_1$ and $X_2$ is chlorine or one of them is hydrogen, and

n is 1.

3. Agent according to claim 1, characterised in that it contains as active ingredient diethyl chloroacetylaminomethylphosphonate.

4. Agent according to claim 1, characterised in that it contains as active ingredient diethyl dichloroacetylaminoethylphosphonate.

5. Novel haloacylaminoalkylphosphonates, haloacylaminoalkylphosphinates or haloacylaminoalkylphosphine oxides of the formula I

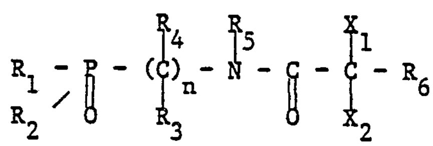

(I)

wherein

$R_1$ is $C_1$-$C_4$ alkyl, $C_1$-$C_4$ alkoxy, $C_2$-$C_4$ alkenyloxy, $C_2$-$C_4$ alkynyloxy, $C_1$-$C_4$ haloalkoxy, $C_2$-$C_8$ alkoxyalkoxy or $C_1$-$C_4$ cyanoalkoxy,

$R_2$ is hydrogen or a substituent as defined for $R_1$,

$R_3$ and $R_4$ are each independently hydrogen, $C_1$-$C_4$ alkyl or one of them is also a radical

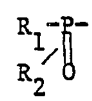

or

$R_3$ and $R_4$ taken together with the carbon atom to which they are attached are also a $C_3$-$C_{11}$ cycloalkyl radical,

$R_5$ is hydrogen, $C_1$-$C_4$ alkyl, $C_3$-$C_7$ cycloalkyl, $C_2$-$C_4$-alkenyl, $C_2$-$C_4$ alkynyl, $C_2$-$C_8$ alkoxyalkyl, $C_1$-$C_4$-haloalkyl or aralkyl,

$R_6$ is hydrogen or $C_1$-$C_4$ alkyl,

$X_1$ and $X_2$ are each halogen or one them is also hydrogen, and

n is 1, 2 or 3,

with the proviso that $R_1$ and $R_2$ may not both be methoxy or ethoxy when n is 1, each of $R_3$, $R_4$ and $R_6$ is hydrogen, $R_5$ is hydrogen or methyl, and each of $X_1$ and $X_2$ is chlorine or one of them is also hydrogen.

6. Novel haloacylaminoalkylphosphonates of the formula I according to claim 5, wherein each of $R_1$ and $R_2$ is $C_3$-$C_4$ alkoxy, $C_2$-$C_4$ alkenyloxy, $C_2$-$C_4$ alkynyloxy, $C_1$-$C_4$ haloalkoxy, $C_2$-$C_8$ alkoxyalkoxy or $C_1$-$C_4$ cyanoalkoxy, and
$R_3$, $R_4$, $R_5$, $R_6$, $X_1$, $X_2$ and n are as defined in claim 5.

7. Novel haloacylaminoalkylphosphonates of the formula I according to claim 5, wherein each of $R_1$ and $R_2$ is $C_1$-$C_4$ alkoxy, $C_2$-$C_4$ alkenyloxy, $C_2$-$C_4$ alkynyloxy, $C_1$-$C_4$ haloalkoxy, $C_2$-$C_8$ alkoxyalkoxy or $C_1$-$C_4$ cyanoalkoxy, each of
$R_3$ and $R_4$ is $C_1$-$C_4$ alkyl or one of them is also a radical

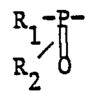

while $R_5$, $R_6$, $X_1$, $X_2$ and n are as defined in claim 5.

8. Diethyl chloroacetylaminoprop-2-ylphosphonate according to claim 5.

9. Diethyl chloroacetylbenzylaminoprop-2-ylphosphonate according to claim 5.

10. Diethyl chloroacetylaminomethylidenediphosphonate according to claim 5.

11. Diethyl chloroacetylaminocyclohex-1-ylphosphonate according to claim 5.

12. Novel haloacylaminoalkylphosphinates of the formula I according to claim 5, wherein
$R_1$ is $C_1$-$C_4$ alkoxy, $C_2$-$C_4$ alkenyloxy, $C_2$-$C_4$ alkynyloxy, $C_1$-$C_4$ haloalkoxy, $C_2$-$C_8$ alkoxyalkoxo or $C_1$-$C_4$ cyanoalkoxy,
$R_2$ is hydrogen or $C_1$-$C_4$ alkyl, while $R_3$, $R_4$, $R_5$, $R_6$, $X_1$, $X_2$ and n are as defined in claim 5.

13. Novel haloacylaminoalkylphosphinates of the formula I according to claim 5, wherein
$R_1$ is $C_1$-$C_4$ alkoxy,
$R_2$ is $C_1$-$C_4$ alkyl,
each of $R_3$ and $R_4$ is hydrogen or methyl,
$R_5$ is hydrogen, $C_1$-$C_4$ alkyl or benzyl,
$R_6$ is hydrogen,
each of $X_1$ and $X_2$ is chlorine or one of them is also hydrogen, and
n is 1.

14. Novel haloacylaminoalkylphosphine oxides of the formula I according to claim 5, wherein
$R_1$ is $C_1$-$C_4$ alkyl,
$R_2$ is hydrogen or $C_1$-$C_4$ alkyl, while
$R_3$, $R_4$, $R_5$, $R_6$, $X_1$, $X_2$ and n are as defined in claim 5.

15. Novel haloacylaminoalkylphosphine oxides of the formula I according to claim 5, wherein
$R_1$ is $C_1$-$C_4$-alkyl,
$R_2$ is hydrogen or $C_1$-$C_4$ alkyl,
each of $R_3$ and $R_4$ is hydrogen or methyl,
$R_5$ is hydrogen, $C_1$-$C_4$ alkyl or benzyl,
$R_6$ is hydrogen,
each of $X_1$ and $X_2$ is chlorine or one of them is also hydrogen, and
n is 1.

16. Process for preparing the haloacylaminoalkylphosphonates, haloacylaminoalkylphosphinates and haloacylaminoalkylphosphine oxides of the formula I according to claim 5, characterised in that an amino-alkylphosphonate, aminoalkylphosphinate or aminoalkylphosphine oxide of the formula II

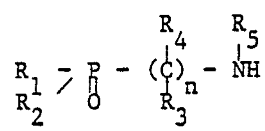
(II)

wherein $R_1$, $R_2$, $R_3$, $R_4$, $R_5$ and n have the meanings given in claim 5, is reacted with an equimolar amount of a haloacyl halide or haloacyl anhydride of the formula III

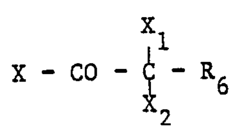
(III)

wherein Y is a halogen atom or a radical

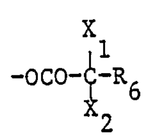

wherein $R_6$, $X_1$ and $X_2$ have the meanings given in claim 5, in a non-aqueous, inert organic solvent and in the presence of an equimolar amount of an organic base, and the condensation product is isolated from the reaction mixture.

17. Method of selectively controlling weeds in crops of useful plants, characterised in that the crops or the crop area is treated (a) with a herbicide and (b) with an effective amount of a haloacylalkylaminophosphonate, haloacylalkylaminophosphinate or haloacylalkylaminophosphine oxide according to claim 1 as safener.

18. Use of haloacylalkylaminophosphonates, haloacylalkylaminophosphinates or haloacylalkylaminophosphine oxides of the formula I according to claim 1 for protecting cultivated plants from the harmful effects of herbicides.

19. Use of haloacylalkylaminophosphonates, haloacylalkylaminophosphinates or haloacylalkylaminophosphine oxides of the formula I according to claim 1 for protecting cereal, maize and sorghum crops from damage caused by haloacetanilide or thiocarbamate herbicides.

20. Method of protecting cultivated plants from damage caused by the application of herbicides, characterised in that

a) the crop area of the plants is treated before or during application of the herbicide, or

b) the seeds or seedlings of the plants or the plants themselves are treated with an effective amount of a haloacylaminoalkylphosphonate, haloacylaminoalkylphosphinate or haloacylaminoalkylphosphine oxide of the formula I according to claim 1.

21. Seeds of useful plantations, which seeds have been treated with an effective amount of a haloacylalkylaminophosphonate, haloacylalkylaminophosphinate or haloacylalkylaminophosphine oxide according to claim 1.

## Revendications

1. Agent pour la protection des plantes cultivées de l'action phytotoxique des herbicides, caractérisé par le fait qu'il contient, outre une matière de support inerte et l'herbicide, comme substance active antagonisante, un phosphonate ou phosphinate d'halogènoacyl-aminoalkyle ou un oxyde d'halogènoacyl-aminoalkyl-phosphine répondant à la formule I

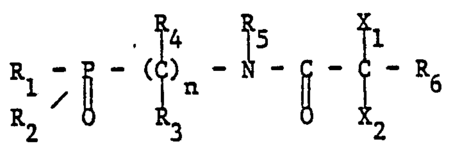

(I)

dans laquelle

$R_1$ désigne un groupe alkyle en $C_1$ à $C_4$, alcoxy en $C_1$ à $C_4$, alcoxy en $C_1$ à $C_4$, alcényloxy en $C_2$ à $C_4$, alcynyloxy en $C_2$ à $C_4$, halogènoalcoxy en $C_1$ à $C_4$, alcoxyalcoxy en $C_2$ à $C_8$ ou cyanoalcoxy en $C_1$ à $C_4$,

$R_2$ désigne l'hydrogène ou un substituant tel que $R_1$,

$R_3$ et $R_4$ désignent indépendamment l'un de l'autre chacun l'oxygène, un groupe alkyle en $C_1$ à $C_4$ ou un de ceux-ci est également un radical

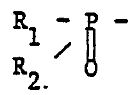

$R_3$ et $R_4$ forment également avec l'atome de carbone auquel ils sont liés, un radical cycloalkyle en $C_3$ à $C_{11}$,

$R_5$ est l'hydrogène, un groupe alkyle en $C_1$ à $C_4$, cycloalkyle en $C_3$ à $C_7$, alcényle en $C_2$ à $C_4$, alcynyle en $C_2$ à $C_4$, alcoxyalkyle en $C_2$ à $C_8$, halogènoalkyle en $C_1$ à $C_4$ ou aralkyle,

$R_6$ désigne l'hydrogène ou un groupe alkyle en $C_1$ à $C_4$,

$X_1$ et $X_2$ sont tous deux des halogènes ou l'un de ceux-ci est également l'hydrogène et

n est un nombre égal à 1, 2 ou 3.

2. Agent selon la revendication 1, caractérisé par le fait qu'il contient comme substance active un phosphonate d'halogènoacyl-aminoalkyle répondant à la formule I, revendication 1, dans laquelle

$R_1$ et $R_2$ sont chacun un groupe alcoxy en $C_1$ à $C_4$,

$R_3$ et $R_4$ sont chacun l'hydrogène ou un groupe méthyle,

$R_5$ est l'hydrogène, un groupe alkyle en $C_1$ à $C_4$ ou un groupe benzyle,

$R_6$ est l'hydrogène,

$X_1$ et $X_2$ sont chacun le chlore, ou l'un de ceux-ci est l'hydrogène et

n est le nombre 1.

3. Agent selon la revendication 1, caractérisé par le fait qu'il contient comme substance active l'ester diéthylique de l'acide chloracétylaminométhyl-phosphonique.

4. Agent selon la revendication 1, caractérisé par le fait qu'il contient comme substance active l'ester diéthylique de l'acide dichloracétylaminoéthyl-phosphonique.

5. Nouveaux phosphonates, phosphinates d'halogénoacylaminoalkyle, ou oxydes d'halogénoacylaminoalkyle répondant à la formule I

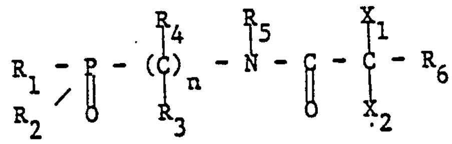
(I)

dans laquelle

$R_1$ désigne un groupe alkyle en $C_1$ à $C_4$, alcoxy en $C_1$ à $C_4$, alcényloxy en $C_2$ à $C_4$, alcynyloxy en $C_2$ à $C_4$, halogènoalcoxy en $C_1$ à $C_4$, alcoxyalcoxy en $C_2$ à $C_8$ ou cyanoalcoxy en $C_1$ à $C_4$,

$R_2$ désigne l'hydrogène ou un substituant tel que $R_1$,

$R_3$ et $R_4$ désignent indépendamment l'un de l'autre chacun l'oxygène, un groupe alkyle en $C_1$ à $C_4$ ou un de ceux-ci est également un radical

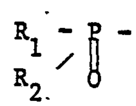

$R_3$ et $R_4$ forment également avec l'atome de carbone auquel ils sont liés, un radical cycloalkyle en $C_3$ à $C_{11}$,

$R_5$ est l'hydrogène, un groupe alkyle en $C_1$ à $C_4$, cycloalkyle en $C_3$ à $C_7$, alcényle en $C_2$ à $C_4$, alcynyle en $C_2$ à $C_4$, alcoxyalkyle en $C_2$ à $C_8$, halogènoakyle en $C_1$ à $C_4$ ou aralkyle,

$R_6$ désigne l'hydrogène ou un groupe alkyle en $C_1$ à $C_4$,

$X_1$ et $X_2$ sont tous deux des halogènes ou l'un de ceux-ci est également l'hydrogène et

n est un nombre égal à 1, 2 ou 3, sous réserve que $R_1$ et $R_2$ ne peuvent pas être tous deux un groupe méthoxy ou éthoxy lorsque n = 1, $R_3$, $R_4$ et $R_6$ son chacun l'hydrogène,

$R_5$ est l'hydrogène ou un groupe méthyle et $X_1$ et $X_2$ sont chacun le chlore, ou un de ceux-ci est également l'hydrogène.

6. Nouveaux phosphonates d'halogènoacyl-aminoalkyle répondant à la formule I, selon la revendication 1, dans laquelle

$R_1$ et $R_2$ sont chacun un groupe alcoxy en $C_3$ à $C_4$, alcényloxy en $C_2$ à $C_4$, alcynyloxy en $C_2$ à $C_4$, halogènoalcoxy en $C_1$ à $C_4$, alcoxyalcoxy en $C_2$ à $C_8$ ou cyanoalcoxy en $C_1$ à $C_4$ et

$R_3$, $R_4$, $R_5$, $R_6$, $X_1$, $X_2$ et n ont la signification indiquée dans la revendication 5.

7. Nouveaux phosphonates d'halogénoacyl-aminoalkyle répondant à la formule I selon la revendication 5, dans laquelle

$R_1$ et $R_2$ sont chacun un groupe alcoxy en $C_1$ à $C_4$, alcényloxy en $C_2$ et $C_4$, alcynyloxy en $C_2$ à $C_4$, halogénoalcoxy en $C_1$ à $C_4$, alcoxyalcoxy en $C_2$ à $C_8$ ou cyanoalcoxy en $C_1$ à $C_4$,

$R_3$ et $R_4$ sont chacun un groupe alkyle en $C_1$ à $C_4$ ou l'un de ceux-ci est également un radical

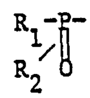

tandis que $R_5$, $R_6$, $X_1$, $X_2$ et n ont la signification indiquée dans la revendication 5.

8. Chloracétyl-aminoprop-2-yl-phosphonate de diéthyle selon la revendication 5.

9. Chloracétyl-benzylaminoprop-2-yl-phosphonate de diéthyle selon la revendication 5.

10. Chloracétyl-aminométhylidène-diphosphonate de diéthyl selon la revendication 5.

11. Chloracétyl-amino-cyclohex-1-yl-phosphonate de diéthyle selon la revendication 5.

12. Nouveaux phosphinates d'halogénoacyl-aminoalkyle répondant à la formule I selon la revendication 5, dans laquelle

$R_1$ désigne un groupe alcoxy en $C_1$ à $C_4$, alcényloxy en $C_2$ à $C_4$, alcynyloxy en $C_2$ à $C_4$, halogénoalcoxy en $C_1$ à $C_4$, alcoxyalcoxy en $C_2$ à $C_8$ ou cyanalcoxy en $C_1$ à $C_4$,

$R_2$ est l'hydrogène ou un groupe alkyle en $C_1$ à $C_4$, tandis que $R_3$, $R_4$, $R_5$, $R_6$, $X_1$, $X_2$ et n ont la signification indiquée dans la revendication 5.

13. Nouveaux phosphinates d'halogénacyl-aminoalkyle répondant à la formule I selon la revendication 5, dans laquelle

$R_1$ désigne un groupe alcoxy en $C_1$ à $C_4$,

$R_2$ est un groupe alkyle en $C_1$ à $C_4$,

$R_3$ et $R_4$ sont chacun l'hydrogène ou un groupe méthyle,

$R_5$ est l'hydrogène, un groupe alkyle en $C_1$ à $C_4$ ou benzyle,

$R_6$ est l'hydrogène,

$X_1$ et $X_2$ sont chacun le chlore ou un de ceux-ci est également l'hydrogène et
n désigne le nombre 1.

14. Nouveaux oxydes d'halogénoacyl-aminoalkyl-phosphine répondant à la formule I selon la revendication 5, dans laquelle
$R_1$ désigne un groupe alkyle en $C_1$ à $C_4$,
$R_2$ désigne l'hydrogène, ou un groupe alkyle en $C_1$ à $C_4$, tandis que
$R_3$, $R_4$, $R_5$, $R_6$, $X_1$, $X_2$ et n ont la signification indiquée dans la revendication 5.

15. Nouveaux oxydes d'halogénoacyl-aminoalkyle phosphine répondant à la formule I selon la revendication 5, dans laquelle
$R_1$ est un groupe alkyle en $C_1$ à $C_4$,
$R_2$ est l'hydrogène ou un groupe alkyle en $C_1$ à $C_4$,
$R_3$ et $R_4$ sont chacun l'hydrogène ou un groupe méthyle,
$R_5$ est l'hydrogène, un groupe alkyle en $C_1$ à $C_4$ ou benzyle,
$R_6$ est l'hydrogène,
$X_1$ et $X_2$ sont chacun le chlore ou un de ceux-ci est également l'hydrogène et
n désigne le nombre 1.

16. Procédé de préparation des phosphonates et phosphinates d'halogénoacyl-aminoalkyle et des oxydes d'halogénoacyl-aminoalkyle-phosphine répondant à la formule I selon la revendication 5, caractérisé par le fait qu'on fait réagir un phosphonate ou un phosphinate d'aminoalkyle ou un oxyde de phosphine répondant à la formule II

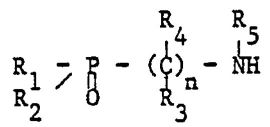

(II)

dans laquelle $R_1$, $R_2$, $R_3$, $R_4$, $R_5$ et n ont la signification indiquée dans la revendication 5, dans un solvant organique anhydre, inerte, en présence de la quantité équimolaire d'une base organique, avec la quantité équimolaire d'un halogénure d'halogénoacyle ou d'un anhydride d'halogénoacyle répondant à la formule III

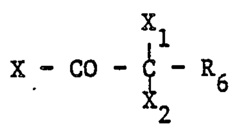

(III)

dans laquelle Y désigne un atome d'halogène ou un radical

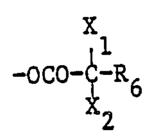

dans lequel $R_6$, $X_1$ et $X_2$ ont la signification indiquée dans la revendication 5, et on isole le produit de condensation du mélange réactionnel.

17. Procédé pour lutter sélectivement contre les mauvaises herbes dans les cultures de plantes utiles, caractérisé par le fait qu'on traite les cultures ou leur surface de culture avec a) un herbicide et b) une quantité efficace d'un phosphonate ou phosphinate d'halogénoacyl-aminoalkyle ou d'un oxyde d'halogénoacyl-aminoalkyl-phosphine répondant à la formule I selon la revendication 1, pour la protection des plantes cultivées contre l'action nuisible des herbicides.

18. Utilisation des phosphonates, ou phosphinates d'halogénoacyl-aminoalkyle ou des oxydes d'halogénoacyl-aminoalkyl-phosphine répondant à la formule I de la revendication 1 pour la protection des cultures de plantes contre l'endommagement par les herbicides.

19. Utilisation des phosphonates ou phosphinates d'halogénoacyl-aminoalkyle ou des oxydes d'halogénoacyl-aminoalkyl-phosphine répondant à la formule I selon la revendication 1, pour la protection des cultures de céréales, de maïs et de sorgho contre l'endommagement par des herbicides d'halogénoacétanilide ou de thiocarbamate.

20. Procédé pour la protection des plantes cultivées des dégradations qui se produisent lors de l'application d'herbicides, caractérisé par le fait que
a) on traite la surface de culture pour la plante avant ou pendant l'application d'herbicides, ou
b) on traite la semence ou les boutures des plantes ou la plante elle-même avec une quantité efficace d'un phosphonate ou d'un phosphinate d'halogénoacyl-aminoalkyle ou d'un oxyde d'halogénoacyl-aminoalkyl-phosphine répondant à la formule I selon la revendication 1.

21. Semences de plantes utiles qui ont été traitées par une quantité efficace d'un phosphonate ou phosphinate d'halogénoacyl-aminoalkyle ou d'un oxyde d'halogénoacyle-aminoalkyle-phosphine selon la revendication 1.